# EUROPÄISCHE PATENTSCHRIFT

(11) **EP 2 514 650 B1**
(45) Veröffentlichungstag und Bekanntmachung des Hinweises auf die Patenterteilung: **01.03.2017**
(21) Anmeldenummer: 11187449.1
(22) Anmeldetag: 02.11.2011
(51) Int. Cl.: B60T 17/22

(54) **Luftdruckmessvorrichtung**
Air pressure measuring device
Dispositif de capteur de pression barométrique

(30) Priorität: 18.11.2010 AT 19072010
(43) Veröffentlichungstag der Anmeldung: 24.10.2012
(73) Patentinhaber: ÖBB - Technische Services GmbH, 1110 Wien (AT)
(72) Erfinder: Schrolnberger, Daniel, 1100 Wien (AT); Wieser, Robert, 3430 Tulin (AT); Hochstöger, Harald, 1210 Wien (AT); Holzner, Karl, 2100 Leobendorf (AT); Polland, Leopold, 3701 Grossweikersdorf (AT); Gruböck, Christian, 2372 Giesshübl (AT)
(74) Vertreter: Puchberger & Partner Patentanwälte

(56) Entgegenhaltungen:
- WO-A2-02/053438
- US-A- 5 695 258
- US-A1- 2006 048 566

## Beschreibung

Die Erfindung betrifft eine Luftdruckmessvorrichtung zur Prüfung von Druckluftbremssystemen mit zumindest einem Drucksensor und zumindest einem Druckluftanschluss, sowie eine damit verbundene Bremsdruckprüfanlage und ein Verfahren zur Prüfung der Druckluftbremssysteme von Schienenfahrzeugen.

Schienenfahrzeuge verfügen aus Sicherheitsgründen über mehrere Bremsmechanismen, wobei die Betriebsbremse im Allgemeinen Druckluftbremsen sind. Diese Druckluftbremssysteme müssen regelmäßig gewartet und überprüft werden. Aus dem Stand der Technik sind Bremsprobe- bzw. Bremsprüfanlagen zur Prüfung der Druckluftbremssysteme von Fahrzeugen, insbesondere Lastkraftwagen oder Schienenfahrzeugen, bekannt. Beispielsweise beschreibt die AT 504 084 A1 eine Vorrichtung zum Prüfen von pneumatisch betätigbaren Bremsen von Schienenfahrzeugen, welche über einen Druckluftschlauch mit dem zu messenden Schienenfahrzeug verbunden ist.

Das Dokument US 5 695 258 A beschreibt eine tragbare Luftdruckmessvorrichtung zur Prüfung von Druckluftbremssystemen für Schienenfahrzeugen.

Bei der Bremsdruckmessung wird der Luftdruck in dem zu messenden Druckluftbremssystem überwacht, während die Bremse aktiviert oder deaktiviert wird. Die Bremsansprechzeit ist jene Zeit vom Überschreiten eines bestimmten Druckstartwerts bis zum Anliegen eines erforderlichen Druckstoppwerts, und die Bremslösezeit ist jene Zeitspanne vom Unterschreiten des Druckstoppwerts bis zum Unterschreiten des Druckstartwerts. Im einfachsten Fall kann eine derartige Bremsdruckmessung manuell mit Stoppuhr und Manometer erfolgen, was jedoch die Genauigkeitserfordernisse keinesfalls erfüllen kann. Statt dessen werden automatische Bremsprüfanlagen verwendet, weiche über Druckluftschläuche mit den zu messenden Druckluftbremssystemen verbunden werden. Die Steuerung des Bremsprüfvorgangs erfolgt automatisch, beispielsweise mit einer speicherprogrammierbaren Steuerung (SPS).
Ein Problem automatischer Bremsprüfanlagen besteht darin, dass die verwendeten Druckluftschläuche zur Beaufschlagung des Druckluftbremssystems mit Druckluft eine gewisse Länge, beispielsweise 30 Meter, nicht überschreiten sollten, um Druckverlust und daraus resultierende Messfehler zu vermeiden. Demnach muss bei einem Zugverband, welcher oft Längen über 200m erreicht, das Bremsprüfgerät für jeden zu prüfenden Wagen neu positioniert werden.

Als Abhilfe dieses Problems beschreibt die EP 1 103 437 A2 eine Bremsprobeanlage zur Überprüfung der Funktion von Bremsen in Schienenfahrzeugen, die insbesondere über Zusatzgeräte verfügt, die mit einem zentralen Bremsprobegerät durch eine elektrische Signalleitung oder eine Funkstrecke verbunden sind. Derartige Zusatzgeräte umfassen insbesondere Drucksensoren zur Messung des Druckabfalls, und Übertragungsmittel zur Übertragung der Messwerte an die Bremsprüfanlage. Diese Zusatzgeräte erlauben es zwar, eine hinreichend exakte Prüfung der Bremsfunktion in großem Abstand von einem zentralen Bremsprüfgerät durchzuführen, sind jedoch ortsfest angebracht, was eine vielseitige Verwendung dieser Geräte deutlich erschwert. Insbesondere kann eine Prüfung nur an bestimmten Stellen erfolgen. Weiters ist eine gleichzeitige Prüfung der Druckluftbremssysteme mehrerer Wagen nicht möglich.

Darüber hinaus verfügen moderne Schienenfahrzeuge in der Regel über mehrere voneinander unabhängige Bremssysteme mit unabhängigen Druckluftbremssystemen, die mit den bekannten Bremsprüfanlagen ebenso wenig gleichzeitig geprüft werden können, da beispielsweise stets nur eine Luftdruckmessvorrichtung für einen Wagen ortsfest vorgesehen ist.

Die US 2006/0048566 A1 zeigt eine Luftdruckmessvorrichtung zur Prüfung von Druckluftbremsen mit einem Drucksensor und einem Druckluftanschluss, welche tragbar ausgeführt ist und eine Steuerungselektronik, eine Benutzerschnittstelle und eine Funkübertragungseinheit umfasst. Es ist jedoch keine Zeiterfassungseinheit vorgesehen. Die WO 02/053438 A2 zeigt ein Verfahren zum Testen eines Bremssystems mit einem tragbaren Analysegerät, das per Funk mit einem Server kommuniziert. Wiederum ist keine Zeiterfassungseinheit vorgesehen. Die US 2006/0074581 A1 zeigt eine Vorrichtung zum Testen der Bremsen von Schienenfahrzeugen mit einer Luftdruckzufuhr, zahlreichen Ventilen, einem Steuerungskreis, einer Energieversorgung und einem Interface zu einem Webserver, wobei wiederum keine die Ansprechzeiten der Druckluftbremssysteme messende Zeiterfassungseinheit vorgesehen ist. Die US 4, 847, 770 zeigt ein automatisiertes Testsystem zum Testen des Luftdrucks von Bremsen von Schienenfahrzeugen. Die US 2007/0247000 A1 zeigt ein System mit einem den Luftdruck steuernden Gerät und einem tragbaren Steuerungsgerät zur Steuerung des Messvorgangs von Bremssystemen an Schienenfahrzeugen. Schließlich zeigt auch die WO 94/07729 ein derartiges System zum Testen der Bremsen von Schienenfahrzeugen aus dem Stand der Technik. Diesen Vorrichtungen aus dem Stand der Technik ist gemein, dass sie keine die Ansprechzeiten der Druckluftbremssysteme messende Zeiterfassungseinheit aufweisen.

Die technische Aufgabe der Erfindung besteht demnach darin, eine Luftdruckmessvorrichtung vorzusehen, die tragbar ist und unabhängig vom Standort der Bremsprüfanlage verwendet werden kann. Eine weitere technische Aufgabe besteht darin, dass mehrere Luftdruckmessvorrichtungen gleichzeitig verwendbar sind, und insbesondere, dass mehrere Druckluftbremssysteme eines Waggons
gleichzeitig geprüft werden können. Schließlich soll die Zeitdauer des Bremsvorgangs nicht nur zentral, sondern auch lokal an der Luftdruckmessvorrichtung selbst gemessen werden können. Dabei soll die Messung möglichst exakt erfolgen und Druckverluste aufgrund langer Leitungen vermieden werden.

Diese technischen Aufgaben werden erfindungsgemäß dadurch gelöst, dass die Luftdruckmessvorrichtung tragbar ausgeführt ist und eine Steuerungselektronik, eine Benutzerschnittstelle, eine Funkübertragungseinheit sowie eine die Ansprechzeiten der Druckluftbremssysteme messende Zeiterfassungseinheit umfasst.

Eine derartige Luftdruckmessvorrichtung erlaubt es, ortsunabhängig und in beträchtlichem Abstand zur zentralen Bremsdruckprüfanlage Messungen des Luftdrucks von einem oder, bei Verwendung mehrerer Luftdruckmessvorrichtungen, auch mehrerer Druckluftbremssysteme durchzuführen. Durch Vorsehen einer Benutzerschnittstelle an der Luftdruckmessvorrichtung selbst kann der Messvorgang auch lokal, und nicht nur zentral an der zentralen Bremsprüfanlage, beeinflusst werden. Aus dem gleichen Grund ist auch eine Zeiterfassungseinheit an der Luftdruckmessvorrichtung selbst vorgesehen.
Es kann erfindungsgemäß vorgesehen sein, dass die Luftdruckmessvorrichtung eine Funkübertragungsmöglichkeit umfasst. Dabei kann es sich um eine WLAN-, GSM oder beliebige andere Funkübertragungsmöglichkeit handeln, die mit einer entsprechenden Funkübertragungseinheit der zentralen Bremsdruckprüfanlage kommuniziert. Die Kommunikation kann aber auch in Form von UIC- oder anderen kabelgebundenen Verbindungen, insbesondere Busverbindungen, zum Anschluss mehrerer Geräte erfolgen.

Weiters kann die Luftdruckmessvorrichtung eine Statusanzeige, einen elektrischen Akku zur Energieversorgung sowie eine oder mehrere Tasten umfassen. Insbesondere bei der lokalen Verwendung ohne zentrales Bremsprüfgerät wird dadurch ermöglicht, die Prüfung der Druckluftbremssysteme lokal durchzuführen. Dazu kann vorgesehen sein, dass die Statusanzeige auch selbst Messdaten, insbesondere Messzeiten, anzeigen kann. Die Statusanzeige ist jedoch kein notwendiger Teil der Erfindung.

Es kann vorgesehen sein, dass die Statusanzeige eine LED umfasst, welche insbesondere den Ladezustand eines internen Akkus anzeigt. Beim Einschalten der Luftdruckmessvorrichtung kann die Statusanzeige weiters dafür verwendet werden, anzuzeigen, dass ein Nullpunktabgleich erfolgen muss, bevor mit der Messung begonnen werden kann. Der Nullpunktabgleich selbst kann beispielsweise durch Betätigen einer Taste an der Luftdruckmessvorrichtung erfolgen.

Weiters umfasst die Erfindung eine Bremsdruckprüfanlage zur Prüfung der Druckluftbremssysteme von Schienenfahrzeugen mit mindestens einem Druckluftanschluss, einer Datenverarbeitungseinheit und einer Benutzerschnittstelle, wobei die Bremsdruckprüfanlage eine Funkübertragungseinheit umfasst, welche mit mindestens einer erfindungsgemäßen Luftdruckmessvorrichtung in Verbindung steht. Erfindungsgemäß kann die Funkübertragungseinheit der Bremsdruckprüfanlage eine WLAN, GSM oder beliebige andere funkbasierte Sende- und Empfangseinheit umfassen. Es ist aber auch eine beliebige andere Funkübertragungseinheit Teil der Erfindung, ebenso wie eine kabelgebundene Übertragungseinheit.

Es kann erfindungsgemäß vorgesehen sein, dass die Bremsdruckprüfanlage Druckluftanschlüsse, insbesondere einen Werkluftanschluss, einen Hauptluftanschluss und einen Hauptluftbehälteranschluss umfasst. Es kann weiters mindestens ein weiterer Druckluftanschluss zum Anschluss weiterer Druckluftbremssysteme vorgesehen sein, insbesondere zum Anschluss einer automatischen lastabhängigen Bremse.

Weiters kann die erfindungsgemäße Bremsdruckprüfanlage mit einem an ein Schienenfahrzeug angeschlossenen Rampenregler in Verbindung stehen, um den Leitungswiderstand bei der Messung einer längeren Zuggarnitur (Zugverband) zu reduzieren. In diesem Fall wird bei Entlüftung des zu messenden Druckluftbremssystems des Schienenfahrzeugs nicht nur das Ventil an der Bremsdruckprüfanlage, sondern auch ein zweites Ventil am Rampenregler geöffnet, wodurch die Entlüftung schneller stattfindet und Verzögerungen aufgrund langer Druckluftleitungen bei Zugverbänden vermieden werden. Die Verbindung der Bremsdruckprüfanlage mit dem Rampenregler kann ebenfalls drahtlos in Form einer GSM-, WLAN- oder beliebiger anderer Funkverbindung, oder drahtgebunden, beispielsweise in Form einer UIC-Verbindung erfolgen.
Schließlich umfasst die Erfindung ein Verfahren zur Prüfung der Druckluftbremssysteme von Schienenfahrzeugen mit einer erfindungsgemäßen Bremsdruckprüfanlage, welches folgende Schritte umfasst:
a. Verbinden der erfindungsgemäßen Luftdruckmessvorrichtung mit der Druckluftleitung des zu prüfenden Druckluftbremssystems des Schienenfahrzeugs;
b. drahtlose Übermittlung eines Befehlsdatenpakets von der Bremsdruckprüfanlage an die Luftdruckmessvorrichtung;
c. Messung einer Bremsansprechzeit oder Bremslösezeit durch die Luftdruckmessvorrichtung;
d. drahtlose Übermittlung eines Messdatenpakets von der Luftdruckmessvorrichtung an die Bremsdruckprüfanlage.

Es kann erfindungsgemäß vorgesehen sein, dass der Schritt c) des erfindungsgemäßen Verfahrens die Auslösung der Bremsfunktion an der Hauptluftleitung und die Detektion der Bremsansprechzeit zwischen dem Zeitpunkt des Druckanstiegs und dem Zeitpunkt des gefüllten Zustands durch die Zeiterfassungseinheit der Luftdruckmessvorrichtung umfasst.

Es kann erfindungsgemäß weiters vorgesehen sein, dass der Schritt c) im erfindungsgemäßen Verfahren die Beendigung der Bremsfunktion an der Hauptluftleitung und die Detektion der Bremslösezeit zwischen dem Zeitpunkt des Druckabfalls und dem Zeitpunkt des drucklosen Zustands durch die Zeiterfassungseinheit der Luftdruckmessvorrichtung umfasst.

In diesem Kontext bedeutet 'drucklos' stets, dass der Luftdruck einen bestimmten Schwellwert unterschreitet, während 'gefüllt' bedeutet, dass der Luftdruck einen bestimmten Schwellwert überschreitet. Der Regelbetriebsdruck der Hauptluftleitung liegt beispielsweise in der Regel bei 5. Bei diesem Druck ist die Bremse gelöst. Leitet der Triebfahrzeugführer eine Bremsung ein, wird der Druck in der Hauptluftleitung abgesenkt. Die normale Betriebsbremsung wird mit einer Druckabsenkung von 0,4-1,5 bar (Vollbremsung) eingeleitet, die Schnell-, Zwangs- oder Notbremse (NB) entlüftet die Hauptluftleitung auf Umgebungsdruck. Zum Lösen der Bremse wird der Druck wieder auf den Regelbetriebsdruck angehoben.

Es können weiters mehrere Luftdruckmessvorrichtungen vorgesehen sein, wobei die Messdatenpakete sequentiell von einer Luftdruckmessvorrichtung zur nächsten Luftdruckmessvorrichtung übertragen werden, bis die letzte Luftdruckmessvorrichtung die gesammelten Messdatenpakete zurück an die Bremsdruckprüfanlage übermittelt.

Analog können die Befehlsdatenpakete zunächst von der Bremsdruckprüfanlage an eine erste Luftdruckmessvorrichtung, und danach sequentiell von einer Luftdruckmessvorrichtung zur nächsten Luftdruckmessvorrichtung bis zur letzten Luftdruckmessvorrichtung übermittelt werden.

Dazu kann vorgesehen sein, dass jede Luftdruckmessvorrichtung eine eindeutige Kennzeichnung (ID) aufweist, und jede Luftdruckmessvorrichtung nur jene Befehlsdatenpakete auswertet, welche ihre eigene ID aufweisen.

Das Messdatenpaket, welches von der Luftdruckmessvorrichtung zurück an die Bremsdruckprüfanlage übermittelt wird, kann zumindest eine eindeutige Kennzeichnung der Luftdruckmessvorrichtung (insbesondere seine eigene ID) und die gemessene Zeitspanne in Form der im Schritt c) gemessenen Bremsansprechzeit oder Bremslösezeit umfassen. Weiters kann das Messdatenpaket den gemessenen Druckwert, einen Korrekturfaktor, sowie den aktuellen Zustand der Benutzerschnittstelle umfassen. Insbesondere kann der aktuelle Zustand der Benutzerschnittstelle eine oder mehrere gedrückte Tasten umfassen.

Schließlich kann das Befehlsdatenpaket, wie oben erwähnt, zumindest eine eindeutige Kennzeichnung der Luftdruckmessvorrichtung (seine ID) sowie zumindest eine eindeutige Kennzeichnung umfassen, die spezifiziert, ob Druckabfall oder Druckanstieg gemessen werden soll. Das Befehlsdatenpaket kann auch den zu verwendenden Druckstartwert und/oder Druckstoppwert umfassen.

Weitere erfindungsgemäße Merkmale sind der Beschreibung, den Ansprüchen und den Figuren zu entnehmen.

Die erfindungsgemäße Luftdruckmessvorrichtung, die erfindungsgemäße Bremsdruckprüfanlage und das erfindungsgemäße Verfahren wird nun anhand der folgenden Figuren verdeutlicht. Es zeigen
- Fig. 1:: ein Ausführungsbeispiel einer erfindungsgemäßen Luftdruckmessvorrichtung;
- Fig. 2:: ein Blockschaltbild der erfindungsgemäßen Luftdruckmessvorrichtung aus Fig. 1;
- Fig. 3:: ein Blockschaltbild einer erfindungsgemäßen Bremsdruckprüfanlage;
- Fig. 4:: ein Ausführungsbeispiel einer erfindungsgemäßen Bremsdruckprüfanlage welche an ein Schienenfahrzeug angeschlossen ist und mit einer erfindungsgemäßen Luftdruckmessvorrichtung kommuniziert;
- Fig.5:: den zeitlichen Verlauf des Luftdrucks in dem zu messenden Bremszylinder und der Hauptluftleitung eines Schienenfahrzeugs unter Verwendung des erfindungsgemäßen Verfahrens;
- Fig. 6:: ein Ausführungsbeispiel einer erfindungsgemäßen Bremsdruckprüfanlage welche an einen Zugverband angeschlossen ist und mit mehreren erfindungsgemäßen Luftdruckmessvorrichtungen kommuniziert;
- Fig. 7:: den Ablauf der Nachrichtenübermittlung zwischen der Bremsdruckprüfanlage und den Luftdruckmessvorrichtungen des Ausführungsbeispiels aus Fig. 6.

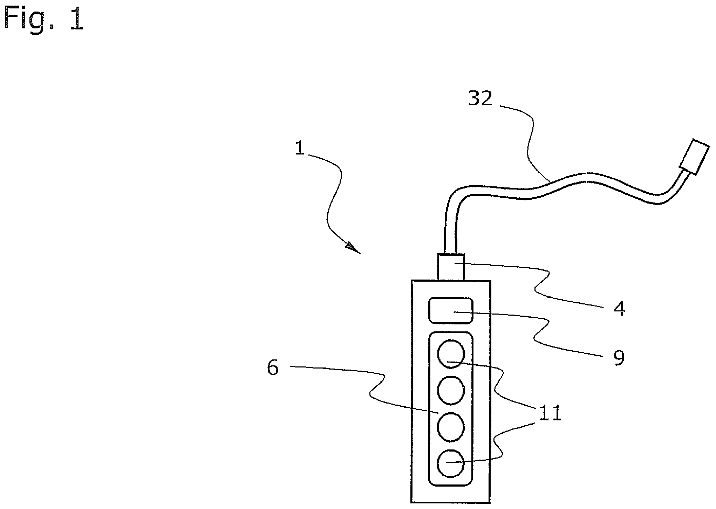

Fig. 1 zeigt ein Ausführungsbeispiel einer erfindungsgemäßen Luftdruckmessvorrichtung 1 mit einem an einem Druckluftanschluss 4 lösbar befestigten Druckluftschlauch 32. Die Luftdruckmessvorrichtung 1 weist weiters eine Benutzerschnittstelle 6 auf, weiche die Tasten 11 und eine Statusanzeige 9 umfasst.

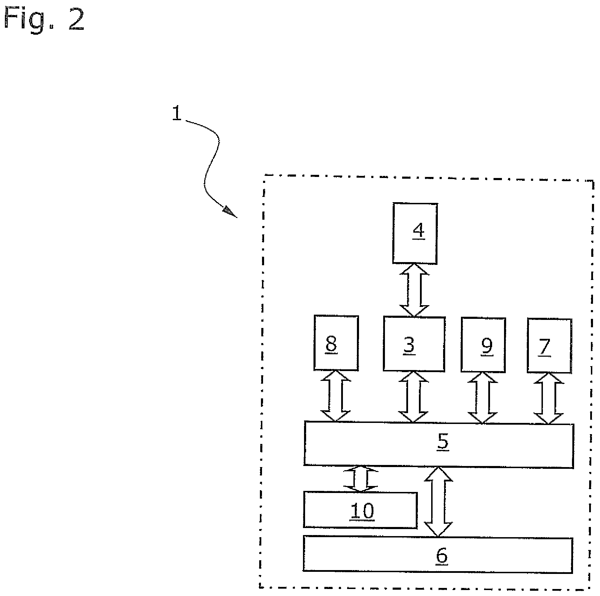

Fig. 2 zeigt ein schematisches Blockschaltbild der erfindungsgemäßen Luftdruckmessvorrichtung 1, wobei die wesentlichen funktionellen Elemente dargestellt sind. Zunächst ist eine Steuerungselektronik 5 vorgesehen, die insbesondere in Form eines Mikrocontrollers ausgeführt sein kann. Die Steuerungselektronik 5 wird von einem elektrischen Akku 10 gespeist und ist mit der Benutzerschnittstelle 6 verbunden. Weiters steht sie in Verbindung mit einer Zeiterfassungseinheit 8, dem Drucksensor 3, einer Statusanzeige 9 und einer Funkübertragungseinheit 7, die insbesondere als WLAN Sende- und Empfangsmodul ausgeführt sein kann. Der Drucksensor 3 ist mit dem Druckluftanschluss 4 verbunden, wobei zusätzlich ein (nicht gezeigtes) Ventil, insbesondere Magnetventil, vorgesehen sein kann, um den Druckluftanschluss 4 selektiv zu sperren.

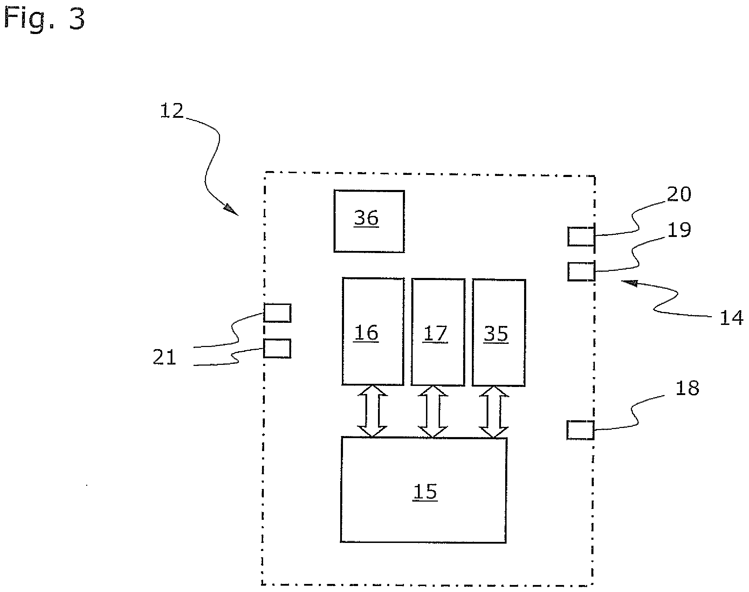

Fig. 3 zeigt ein schematisches Blockschaltbild einer erfindungsgemäßen Bremsdruckprüfanlage 12. Diese verfügt wiederum über eine Datenverarbeitungseinheit 15, die beispielsweise in Form eines eingebauten Computers, Laptops, oder einer Mikrocontrollereinheit ausgeführt sein kann. Die Datenverarbeitungseinheit 15 ist mit einer Benutzerschnittstelle 16 und einer Funkübertragungseinheit 17 verbunden, wobei die Benutzerschnittstelle Mittel zur Ein- und Ausgabe von Daten umfassen kann. Die Funkübertragungseinheit kann wiederum für WLAN- oder GSM-Netze eingerichtet sein. Die Bremsdruckprüfanlage verfügt im vorliegenden Ausführungsbeispiel über einen Werkluftanschluss 18 zur Verbindung mit einer Druckluftversorgung, sowie über zahlreiche Druckluftanschlüsse 14. Diese umfassen insbesondere einen Hauptluftanschluss 19, einen Hauptluftbehälteranschluss 20, sowie weitere Druckluftanschlüsse 21. Es handelt sich dabei um Druckluftausgänge, die gezielt mit Druckluft beaufschlagt werden können, beispielsweise ein Wiegeventil. Zur Ansteuerung dieser Druckluftanschlüsse kann insbesondere eine speicherprogrammierbare Steuerung (35) vorgesehen sein, die mit der Datenverarbeitungseinheit 15 in Verbindung steht, wobei die erfindungsgemäße Vorrichtung jedoch nicht darauf beschränkt sein soll. Weiters verfügt die Bremsdruckprüfanlage 12 über eine elektrische Notbremsüberbrückung (NBÜ) 36, welche dazu dient, den Zug bei betätigter Notbremse weiterfahren zu lassen und erst an einem geeigneten Ort zum Stillstand zu bringen.

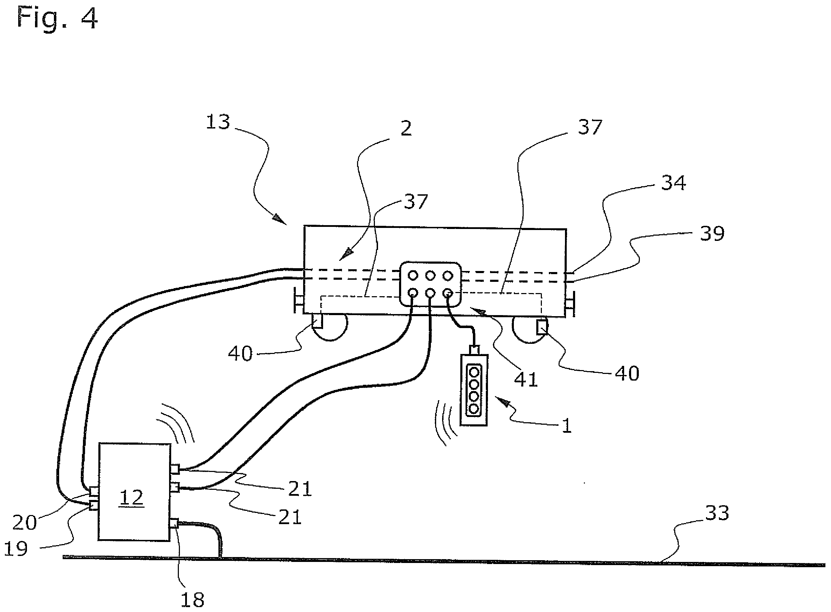

Fig. 4 zeigt ein Ausführungsbeispiel einer erfindungsgemäßen Bremsdruckprüfanlage 12, welche an ein Schienenfahrzeug 13 angeschlossen ist und mit einer erfindungsgemäßen Luftdruckmessvorrichtung 1 zur Prüfung des Luftdruckbremssystems 41 kommuniziert, welche über Druckluftschläuche an das Schienenfahrzeug 13 angeschlossen ist. Das Schienenfahrzeug 13 umfasst die Druckluftleitungen 2, insbesondere die Hauptluftleitung und die Hauptluftbehälterleitung, welche an beiden Enden des Schienenfahrzeugs Ventile 34 (Druckluftkopplung HL) und 39 (Druckluftkopplung HBL) zum Anschluss weiterer Fahrzeuge aufweist. Über eine Bremszylinderleitung sind die Bremszylinder 40 des Schienenfahrzeugs mit einer Steuereinheit verbunden. Bei Absenken des Drucks in der Hauptluftleitung steigt der Druck in der Bremszylinderleitung und eine Bremsung wird eingeleitet. Beim Prüfvorgang wird diese Druckabsenkung im Luftdruckbremssystem 41 durch die Bremsdruckprüfanlage 12 herbeigeführt.
Selbstverständlich ist das Druckluftbremssystem eines Schienenfahrzeuges wesentlich komplexer und es sind in dieser Abbildung aus Gründen der Klarheit nur ausgewählte Details dargestellt.
Die Bremsdruckprüfanlage 12 ist an die Werksluft 33 angeschlossen und versorgt an ihren Druckluftanschlüssen 19, 20 und 21 die verschiedenen Druckluftleitungen 2 des Schienenfahrzeugs 13. Insbesondere ist vorgesehen, dass die Hauptluftleitung und die Hauptluftbehälterleitung an den Hauptluftanschluss 19 und den Hauptluftbehälteranschluss 20 angeschlossen sind. Bei den Druckluftanschlüssen 21 handelt es sich um Anschlüsse zur Versorgung einer automatischen lastabhängigen Bremse.

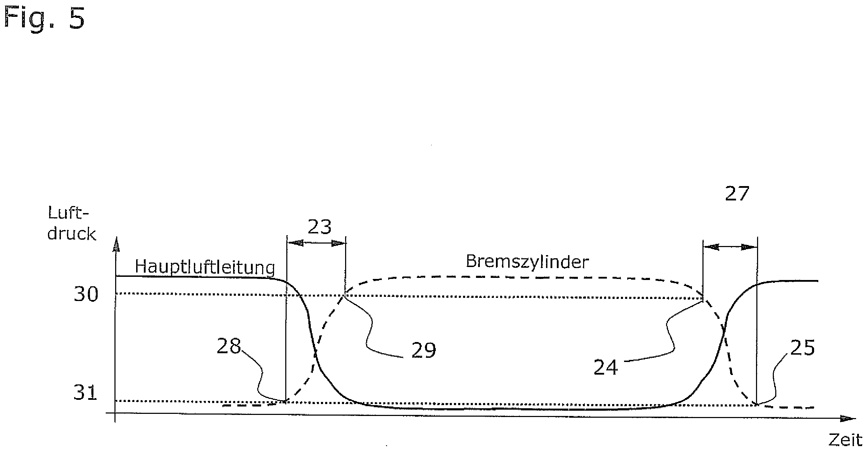

Fig. 5 zeigt den zeitlichen Verlauf des Luftdrucks in einem Bremszylinder eines Schienenfahrzeugs 13 mit strichlierter Linie und der Hauptluftleitung mit durchgezogener Linie unter Verwendung des erfindungsgemäßen Verfahrens. Zunächst ist der Luftdruck in der Hauptluftleitung hoch, insbesondere über dem Druckstartwert 30, der beispielsweise einen Wert von 4,8 bar aufweist. Die Bremse wird betätigt, worauf der Luftdruck in der Hauptluftleitung sinkt und der Druck im Bremszylinder steigt.

Sobald der Luftdruck zum Zeitpunkt des Druckanstiegs 28 über den Druckstartwert 31 steigt, wird die Bremsansprechzeit 23 gemessen, bis der Luftdruck den Druckstoppwert 30 erreicht. Dieser Zeitpunkt wird als Zeitpunkt des gefüllten Zustands 29 bezeichnet, die Bremse ist betätigt.
Nach dieser Messung wird die Bremse wieder gelöst, worauf der Luftdruck in der Hauptluftleitung steigt und in der Bremszylinderleitung sinkt. im Zeitpunkt des Druckabfalls 24 ist der Luftdruck gleich dem Druckstoppwert 30, und es wird die Bremslösezeit 27 gemessen, bis im Zeitpunkt des drucklosen Zustands 25 der Bremszylinderdruck wieder gleich dem Druckstartwert 31 ist und die Bremse gelöst ist.

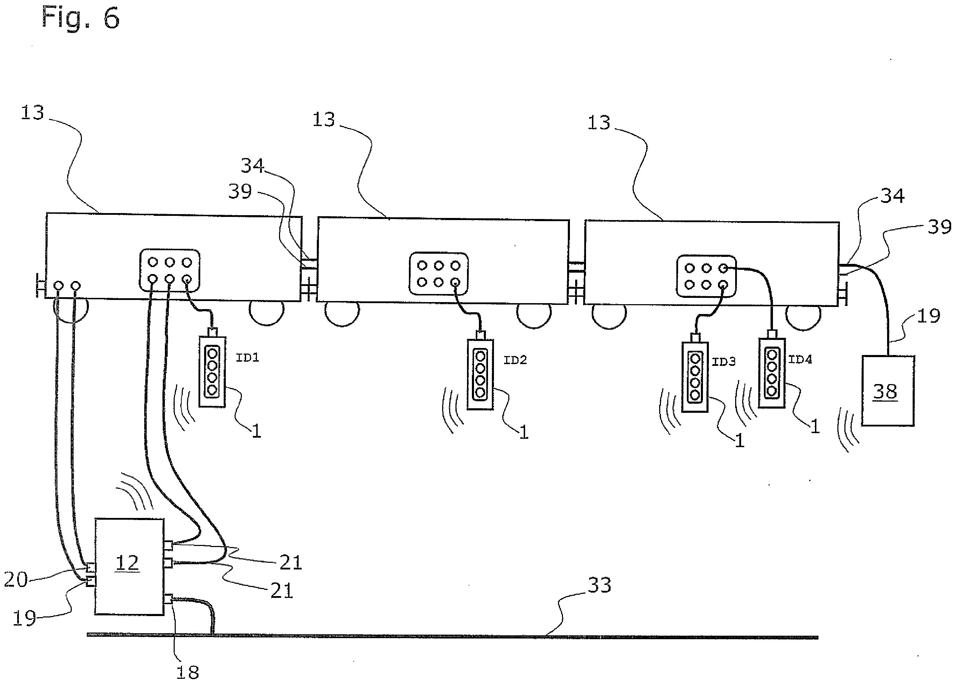

Fig. 6 zeigt ein Ausführungsbeispiel, bei dem eine zentrale Bremsdruckprüfanlage 12 vorgesehen ist, die mit mehreren Luftdruckmessvorrichtungen 1 kommuniziert, welche an verschiedenen, miteinander verbundenen Schienenfahrzeugen 13 angebracht sind. Dabei müssen die Schienenfahrzeuge 13 nur an einer Stelle mit Druckluft versorgt werden, da sowohl die Hauptluftleitung als auch die Hauptluftbehälterleitung durch Druckluftkopplungen 34, 39 miteinander verbunden sind. Sowohl die Bremsdruckprüfanlage 12, als auch die Luftdruckmessvorrichtungen 1 sind mit kurzen Druckluftleitungen an die Schienenfahrzeuge 13 angeschlossen, wodurch die Genauigkeit der Messung optimiert werden kann. Wiederum sind weitere Druckluftleitungen 21 an das Schienenfahrzeug angeschlossen, um zu demonstrieren, dass unterschiedliche Bremssysteme, insbesondere die Betriebsbremse und die lastabhängige Bremse, gleichzeitig gemessen werden können. Insbesondere können mehrere Luftdruckmessvorrichtungen 1 an verschiedenen Druckluftleitungen eines einzigen Schienenfahrzeuges 13 angeschlossen werden. Um eine fehlerfreie Datenübertragung der Messdaten an die zentrale Bremsdruckprüfanlage 12 zu gewährleisten, weisen die Luftdruckmessvorrichtungen 1 eindeutige Kennzeichen (IDs) auf. Dies dient zur Identifikation der Messdaten und zum Ansprechen einer bestimmten Luftdruckmessvorrichtung 1.

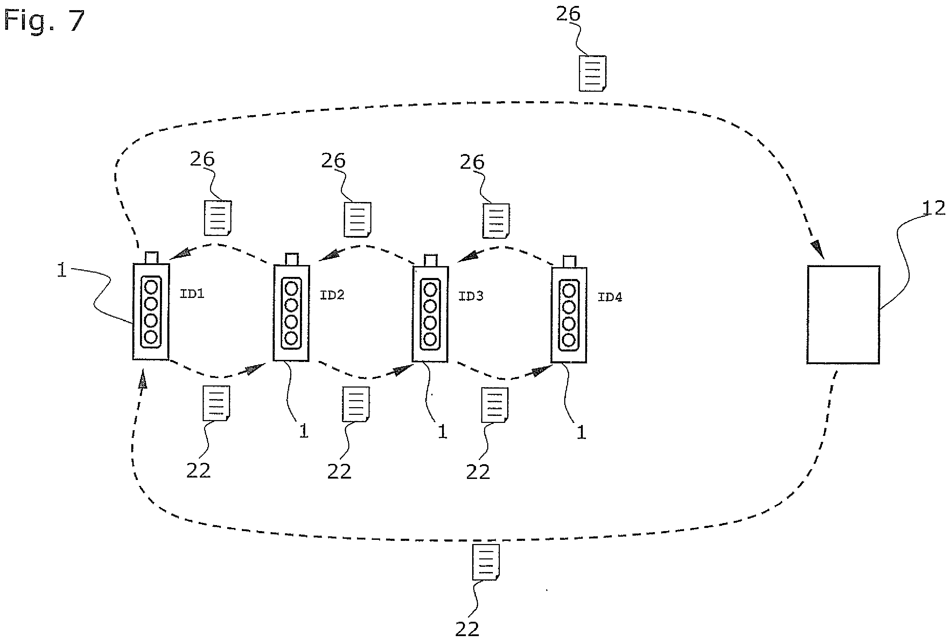

Weiters zeigt Fig. 7 den Anschluss eines Rampenreglers (38) an die Druckluftkopplung der Hauptluftleitung (HL) 34 des Schienenfahrzeugs. Der Rampenregler ist ebenfalls mit dem Bremsprüfgerät 12 verbunden. Beim Auslösen des Bremsvorgangs über das Bremsprüfgerät 12 entlüftet der Rampenregler (38) die Hauptluftleltung, wodurch diese insbesondere bei langen Zugverbänden schneller drucklos wird. Dies ist dann sinnvoll, wenn die Ansprechzeit der zu messenden Bremszylinder ohne Verfälschungen der Messergebnisse aufgrund der physikalischen Eigenschaften der Druckluft in langen Druckluftleitungen (Durchschlagsgeschwindigkeit ca. 250 m/s) notwendig ist.

Fig. 7 zeigt schließlich den Ablauf der Nachrichtenübermittlung zwischen der Bremsdruckprüfanlage 12 und den Luftdruckmessvorrichtungen 1 des Ausführungsbeispiels aus Fig. 6. Im gegenständlichen Ausführungsbeispiel sind vier Luftdruckmessvorrichtungen vorgesehen, welche die Kennzeichnungen ID1, ID2, ID3 und ID4 aufweisen.

Befehlsdaten 22 werden von der Bremsdruckprüfanlage 12 (insbesondere von der speicherprogrammierbaren Steuerung 35 oder der Datenverarbeitungseinheit 15) generiert und an den Drucksensor mit der ID1 gesendet. Sind die Befehlsdatenpakete 22 für ihn bestimmt, so führt er den Befehl aus. Ansonsten werden die Befehlsdatenpakete 22 an die nächste Luftdruckmessvorrichtung 1 mit der ID2 weitergeleitet. Betrifft der Befehl zum Beispiel die Luftdruckmessvorrichtung mit der ID4, so werden die Befehlsdaten weitergereicht, bis sie die Luftdruckmessvorrichtung mit der ID4 erreichen. Befehlsdaten werden so lange weitergereicht, bis die Bremsdruckprüfanlage 12 mit dem Senden der Befehlsdaten stoppt.

Das Format der Befehlsdaten 22 kann insbesondere folgendermaßen aufgebaut sein:

**ID0/1 :Start,Stopp**

| | |
|---|---|
| ID | Luftdruckmessvorrichtung, die betroffen ist |
| 0/1 | Messung der Bremsansprechzeit / Bremslösezeit |
| Start/Stopp | Druckstartwert / Druckstoppwert |

Zum Beispiel 10:200,900 ist ein Befehl für die Luftdruckmessvorrichtung mit der ID 1, die Bremsansprechzeit zu messen, wobei ein Druckstartwert von 200 digits und ein Druckstoppwert von 900 digits in Betracht gezogen werden soll. Das Befehlsdatum 31:1000,55 ist ein Befehl für die Luftdruckmessvorrichtung mit der ID 3, die Bremslösezeit zu messen, wobei ein Druckstartwert von 1000 digits und ein Druckstoppwert von 55 digits in Betracht gezogen werden soll.

Mit dem Senden des Messdatenpakets 26 beginnt die Luftdruckmessvorrichtung 1 mit der ID4, Die Luftdruckmessvorrichtung mit der ID3 wartet auf den Empfang der Daten. Empfängt die ID3 das Messdatenpaket 26, so hängt sie ihre eigenen Messdaten an und schickt das gesamte Datenpaket als Messdatenpaket 26 an die Luftdruckmessvorrichtung mit der ID 2, usw. Empfängt eine Luftdruckmessvorrichtung keine Daten, so werden die Messdaten des vorherigen Zyklus herangezogen und weitergeleitet. Dies geschieht drei mal, wenn dann noch immer keine Daten empfangen wurden, so werden nur noch die eigenen Messdaten weitergeleitet und die fehlerhafte Luftdruckmessvorrichtung wird nicht berücksichtigt. Die Luftdruckmessvorrichtung mit der ID1 empfängt das gesamte Messdatenpaket 26 und leitet sie an die Bremsdruckprüfanlage 12 weiter. Dabei handelt es sich im Normalfall um die Messdaten aller vier Luftdruckmessvorrichtungen.

Das Format des Messdaten 26 kann insbesondere folgendermaßen aufgebaut sein:

**ID:Druckwert,Korrekturfaktor,Messzeit,Tastenfunktion**

| | |
|---|---|
| ID | Luftdruckmessvorrichtung, die betroffen ist |
| Druckwert | Gemessener Druckwert in digits |
| Korrekturfaktor | fix programmierter Korrekturfaktor |
| Messzeit | Gemessene Zeit im ms |
| Tastenfunktion | beispielsweise 0 für keine Taste gedrückt, |
| | 1 für erste Taste gedrückt, |
| | 2 für zweite Taste gedrückt, |
| | 3 für beide Tasten gedrückt. |

Beispielsweise bedeuten die Messdaten 1:55,0.5,4555,3 dass dies die Messdaten der Luftdruckmessvorrichtung mit der ID1 sind, der Druckwert bei 55 digits liegt, der Korrekturfaktor 0,5 beträgt, die letzte Zeitmessung 4555ms beträgt und im Moment beide Tasten betätigt sind.

Die Erfindung beschränkt sich selbstverständlich nicht auf die gezeigten Ausführungsbeispiele und umfasst auch andere Vorrichtungen oder Verfahren im Rahmen des erfindungsgemäßen Gedankens. Insbesondere umfasst die Erfindung auch Luftdruckmessvorrichtungen zur Verwendung bei Lastkraftwagen oder anderen, nicht schienengebundenen Fahrzeuge, die über pneumatische Bremsen verfügen.

### Bezugszeichenliste

- 1: Luftdruckmessvorrichtung
- 2: Druckluftleitung
- 3: Drucksensor
- 4: Druckluftanschluss
- 5: Steuerungselektronik
- 6: Benutzerschnittstelle
- 7: Funkübertragungseinheit
- 8: Zeiterfassungseinheit
- 9: Statusanzeige
- 10: Elektrischer Akku
- 11: Tasten
- 12: Bremsdruckprüfanlage
- 13: Schienenfahrzeug
- 14: Druckluftanschluss
- 15: Datenverarbeitungseinheit
- 16: Benutzerschnittstelle
- 17: Funkübertragungseinheit
- 18: Werkluftanschluss
- 19: Hauptluftanschluss
- 20: Hauptluftbehälteranschluss
- 21: Druckluftanschluss
- 22: Befehlsdatenpaket
- 23: Bremsansprechzeit
- 24: Zeitpunkt des Druckabfalls
- 25: Zeitpunkt des drucklosen Zustands
- 26: Messdatenpaket
- 27: Bremslösezeit
- 28: Zeitpunkt des Druckanstiegs
- 29: Zeitpunkt des gefüllten Zustands
- 30: Druckstoppwert
- 31: Druckstartwert
- 32: Druckluftschlauch
- 33: Werksluft
- 34: Druckluftkopplung HL
- 35: Speicherprogrammierbare Steuerung
- 36: Elektrische Notbremsüberbrückung
- 37: Bremszylinderleitung
- 38: Rampenregler
- 39: Druckluftkupplung HBL
- 40: Bremszylinder
- 41: Druckluftbremssystem

## Patentansprüche

1. Luftdruckmessvorrichtung (1) zur Prüfung von Druckluftbremssystemen (41) mit einem Drucksensor (3) und einem Druckluftanschluss (4), **dadurch gekennzeichnet, dass** die Luftdruckmessvorrichtung (1) tragbar ausgeführt ist und eine Steuerungselektronik (5), eine Benutzerschnittstelle (6), eine Funkübertragungseinheit (7) sowie eine die Ansprechzeiten der Druckluftbremssysteme (41) messende Zeiterfassungseinheit (8) umfasst.

2. Luftdruckmessvorrichtung (1) nach Anspruch 1, **dadurch gekennzeichnet, dass** die Funkübertragungseinheit (7) eine WLAN-, GSM- oder beliebige andere funkbasierte Sende- und Empfangseinheit umfasst.

3. Luftdruckmessvorrichtung (1) nach Anspruch 1 oder 2, **dadurch gekennzeichnet, dass** die Luftdruckmessvorrichtung (1) einen elektrischen Akku (10) zur Energieversorgung umfasst.

4. Bremsdruckprüfanlage (12) zur Prüfung der Druckluftbremssysteme (41) von Schienenfahrzeugen (13) mit mindestens einem Druckluftanschluss (14), einer Datenverarbeitungseinheit (15) und einer Benutzerschnittstelle (16), **dadurch gekennzeichnet, dass** die Bremsdruckprüfanlage (12) eine Funkübertragungseinheit (17) umfasst und mit mindestens einer Luftdruckmessvorrichtung (1) gemäß einem der Ansprüche 1 bis 3.

5. Bremsdruckprüfanlage (12) nach Anspruch 4, **dadurch gekennzeichnet, dass** die Funkübertragungseinheit (17) eine WLAN-, GSM- oder beliebige andere funkbasierte Sende- und Empfangseinheit umfasst.

6. Bremsdruckprüfanlage (12) nach Anspruch 4 oder 5, **dadurch gekennzeichnet, dass** die Bremsdruckprüfanlage (12) Druckluftanschlüsse, insbesondere einen Werkluftanschluss (18), einen Hauptluftanschluss (19) und einen Hauptluftbehälteranschluss (20) umfasst.

7. Bremsdruckprüfanlage (12) nach Anspruch 6, **dadurch gekennzeichnet, dass** die Bremsdruckprüfanlage (12) mindestens einen weiteren Druckluftanschluss (21) zum Anschluss weiterer Druckluftbremssysteme (41), insbesondere einer automatischen lastabhängigen Bremse, umfasst.

8. Bremsdruckprüfanlage (12) nach einem der Ansprüche 4 bis 7, **dadurch gekennzeichnet, dass** die Bremsdruckprüfanlage (12) mit einem an ein Schienenfahrzeug (13) angeschlossenen Rampenregler (38) in Verbindung steht, um den Leitungswiderstand bei der Messung eines Zugverbandes zu reduzieren.

9. Verfahren zur Prüfung der Druckluftbremssysteme (41) von Schienenfahrzeugen (13) mit einer Bremsdruckprüfanlage (12) gemäß einem der Ansprüche 4 bis 8, **dadurch gekennzeichnet, dass** das Verfahren folgende Schritte umfasst:
a. Verbinden der Luftdruckmessvorrichtung (1) mit der Druckluftleitung (2) des zu messenden Druckluftbremssystems (41) der Schienenfahrzeuge (13);
b. drahtlose Übermittlung eines Befehlsdatenpakets (22) von der Bremsdruckprüfanlage (12) an die Luftdruckmessvorrichtung (1);
c. Messung einer Bremsansprechzeit (23) oder Bremslösezeit (27) durch die Luftdruckmessvorrichtung (1);
d. drahtlose Übermittlung eines Messdatenpakets (26) von der Luftdruckmessvorrichtung (1) an die Bremsdruckprüfanlage (12).

10. Verfahren nach Anspruch 9, **dadurch gekennzeichnet, dass** der Schritt c) die Auslösung der Bremsfunktion an der Hauptluftleitung und die Detektion der Bremsansprechzeit (23) zwischen dem Zeitpunkt des Druckanstiegs (28) und dem Zeitpunkt des gefüllten Zustands (29) durch die Zeiterfassungseinheit (8) der Luftdruckmessvorrichtung (1) umfasst.

11. Verfahren nach Anspruch 9, **dadurch gekennzeichnet, dass** der Schritt c) die Beendigung der Bremsfunktion an der Hauptluftleitung und die Detektion der Bremslösezeit (27) zwischen dem Zeitpunkt des Druckabfalls (24) und dem Zeitpunkt des drucklosen Zustands (25) durch die Zeiterfassungseinheit (8) der Luftdruckmessvorrichtung (1) umfasst.

12. Verfahren nach einem der Ansprüche 9 bis 11, **dadurch gekennzeichnet, dass** mehrere Luftdruckmessvorrichtungen (1) vorgesehen sind und die Messdatenpakete (26) sequentiell von einer Luftdruckmessvorrichtung (1) zur nächsten Luftdruckmessvorrichtung (1) übertragen werden, bis die letzte Luftdruckmessvorrichtung (1) die gesammelten Messdatenpakete (26) an die Bremsdruckprüfanlage (12) übermittelt.

13. Verfahren nach einem der Ansprüche 9 bis 12, **dadurch gekennzeichnet, dass** mehrere Luftdruckmessvorrichtungen (1) vorgesehen sind und die Befehlsdatenpakete (22) zunächst von der Bremsdruckprüfanlage (12) an eine erste Luftdruckmessvorrichtung (1), und danach sequentiell von einer Luftdruckmessvorrichtung (1) zur nächsten Luftdruckmessvorrichtung (1) bis zur letzten Luftdruckmessvorrichtung (1) übermittelt werden.

14. Verfahren nach einem der Ansprüche 9 bis 13, **dadurch gekennzeichnet, dass** das Messdatenpaket (26) zumindest eine eindeutige Kennzeichnung der Luftdruckmessvorrichtung (1) und die gemessene Zeitspanne in Form der Bremsansprechzeit (23) oder der Bremslösezeit (27) umfasst.

15. Verfahren nach Anspruch 14, **dadurch gekennzeichnet, dass** das Messdatenpaket (26) weiters den gemessenen Druckwert, einen Korrekturfaktor, sowie den Zustand der Benutzerschnittstelle (6) umfasst.

16. Verfahren nach einem der Ansprüche 9 bis 15, **dadurch gekennzeichnet, dass** das Befehlsdatenpaket (22) zumindest eine eindeutige Kennzeichnung der Luftdruckmessvorrichtung (1) sowie zumindest eine eindeutige Kennzeichnung umfasst, die spezifiziert, ob Druckabfall oder Druckanstieg gemessen wird.

17. Verfahren nach Anspruch 16, **dadurch gekennzeichnet, dass** das Befehlsdatenpaket (22) weiters den Druckstartwert (30) und/oder den Druckstoppwert (31) umfasst.

18. Verfahren nach einem der Ansprüche 9 bis 17, **dadurch gekennzeichnet, dass** die Bremsdruckprüfanlage (12) bei einer fallenden Hauptluftleitungs-Flanke einen Befehl an einen Rampenregler (38) zur Entlüftung der Hauptluftleitung abgibt.

## Claims

1. Air pressure measuring device (1) for testing compressed-air brake systems (41), having a pressure sensor (3) and a compressed air connection (4),
**characterized in that**
the air pressure measuring device (1) is designed to be portable and comprises a control electronic (5), a user interface (6), a wireless transmission unit (7) and a time recording unit (8) which measures the response times of the compressed-air brake systems (41) .

2. Air pressure measuring device (1) according to Claim 1,
**characterized in that**
the wireless transmission unit (7) comprises a WLAN-based, GSM-based or any other wireless-based transmitting and receiving unit.

3. Air pressure measuring device (1) according to Claim 1 or 2,
**characterized in that**
the air pressure measuring device (1) comprises an electrical rechargeable battery (10) for supplying power.

4. Brake pressure test system (12) for testing the compressed-air brake systems (41) of rail vehicles (13), having at least one compressed air connection (14), a data-processing unit (15) and a user interface (16),
**characterized in that**
the brake pressure test system (12) comprises a wireless transmission unit (17), and having at least one air pressure measuring device (1) in accordance with any of the Claims 1 to 3.

5. Brake pressure test system (12) according to Claim 4,
**characterized in that**
the wireless transmission unit (17) comprises a WLAN-based, GSM-based or any other wireless-based transmitting and receiving unit.

6. Brake pressure test system (12) according to Claim 4 or 5,
**characterized in that**
the brake pressure test system (12) comprises compressed air connections, in particular a site air connection (18), a main air connection (19) and a main air tank connection (20).

7. Brake pressure test system (12) according to Claim 6,
**characterized in that**
the brake pressure test system (12) comprises at least one additional compressed air connection (21) for connecting further compressed-air brake systems (41), in particular an automatic load-dependent brake.

8. Brake pressure test system (12) according to any one of Claims 4 to 7,
**characterized in that**
the brake pressure test system (12) is in connection with a ramp controller (38) which is connected to a rail vehicle (13), in order to reduce the line resistance when measuring a trainset.

9. Method for testing the compressed-air brake systems (41) of rail vehicles (13) with a brake pressure test system (12) in accordance with any of the Claims 4 to 8,
**characterized in that**
the method comprises the following steps:
a. Connecting the air pressure measuring device (1) to the compressed air line (2) of the compressed-air brake system (41) of the rail vehicles (13) which is to be measured;
b. wirelessly transmitting a command data packet (22) from the brake pressure test system (12) to the air pressure measuring device (1);
c. measuring a brake response time (23) or brake release time (27) using the air pressure measuring device (1);
d. wirelessly transmitting a measurement data packet (26) from the air pressure measuring device (1) to the brake pressure test system (12).

10. Method according to Claim 9,
**characterized in that**
the step (c) comprises the triggering of the braking function on the main air line and the detection of the brake response time (23) between the time of the pressure increase (28) and the time when the filled state (29) is reached by means of the time recording unit (8) of the air pressure measuring device (1).

11. Method according to Claim 9,
**characterized in that**
the step (c) comprises the termination of the braking function on the main air line and the detection of the brake release time (27) between the time of the pressure drop (24) and the time when the depressurized state (25) is reached by means of the time recording unit (8) of the air pressure measuring device (1).

12. Method according to any one of Claims 9 to 11,
**characterized in that**
a plurality of air pressure measuring devices (1) are provided and the measurement data packets (26) are transmitted sequentially from one air pressure measuring device (1) to the next air pressure measuring device (1), until the last air pressure measuring device (1) transfers the collected measurement data packets (26) to the brake pressure test system (12).

13. Method according to any one of Claims 9 to 12,
**characterized in that**
a plurality of air pressure measuring devices (1) are provided and the command data packets (22) are firstly transferred from the brake pressure test system (12) to a first air pressure measuring device (1), and thereafter sequentially from one air pressure measuring device (1) to the next air pressure measuring device (1) up to the last air pressure measuring device (1).

14. Method according to any one of Claims 9 to 13,
**characterized in that**
the measurement data packet (26) comprises at least one unique identifier of the air pressure measuring device (1) and the measured time period in the form of the brake response time (23) or the brake release time (27).

15. Method according to Claim 14,
**characterized in that**
the measurement data packet (26) additionally comprises the measured pressure value, a correction factor and the status of the user interface (6).

16. Method according to any one of Claims 9 to 15,
**characterized in that**
the command data packet (22) comprises at least one unique identifier of the air pressure measuring device (1) and at least one unique identifier that specifies whether a pressure drop or pressure increase is measured.

17. Method according to Claim 16,
**characterized in that**
the command data packet (22) additionally comprises the pressure starting value (30) and/or the pressure stopping value (31).

18. Method according to any one of Claims 9 to 17,
**characterized in that**
in the event of a falling edge of the main air line the brake pressure test system (12) outputs a command to a ramp controller (38) to bleed the main air line.

## Revendications

1. Dispositif de mesure de pression d'air (1) pour la vérification de systèmes de freinage à air comprimé (41) avec un capteur de pression (3) et un raccordement d'air comprimé (4),
**caractérisé en ce que** le dispositif de mesure de pression d'air (1) est réalisé de façon portative et comprend une électronique de commande (5), une interface utilisateur (6), une unité de transmission radio (7) ainsi qu'une unité de détection de temps (8) mesurant les temps de réponse des systèmes de freinage à air comprimé (41).

2. Dispositif de mesure de pression d'air (1) selon la revendication 1, **caractérisé en ce que** l'unité de transmission radio (7) comprend une unité WLAN, GSM ou une autre unité d'émission et de réception au choix par ondes radio.

3. Dispositif de mesure de pression d'air (1) selon la revendication 1 ou 2, **caractérisé en ce que** le dispositif de mesure de pression d'air (1) comprend un accumulateur électrique (10) pour l'alimentation en énergie.

4. Installation de vérification de pression de freinage (12) pour la vérification des systèmes de freinage à air comprimé (41) de véhicules ferroviaires (13) avec au moins un raccordement d'air comprimé (14), une unité de traitement de données (15) et une interface utilisateur (16), **caractérisée en ce que** l'installation de vérification de pression de freinage (12) comprend une unité de transmission radio (17) et avec au moins un dispositif de mesure de pression d'air (1) selon l'une des revendications 1 à 3.

5. Installation de vérification de pression de freinage (12) selon la revendication 4, **caractérisée en ce que** l'unité de transmission radio (17) comprend une unité WLAN, GSM ou une autre unité d'émission et de réception au choix par ondes radio.

6. Installation de vérification de pression de freinage (12) selon la revendication 4 ou 5, **caractérisée en ce que** l'installation de vérification de pression de freinage (12) comprend des raccordements d'air comprimé, en particulier un raccordement d'air d'atelier (18), un raccordement d'air principal (19) et un raccordement de réservoir d'air principal (20).

7. Installation de vérification de pression de freinage (12) selon la revendication 6, **caractérisée en ce que** l'installation de vérification de pression de freinage (12) comprend au moins un autre raccordement d'air comprimé (21) pour le raccordement d'autres systèmes de freinage à air comprimé (41), en particulier d'un frein automatique en fonction de la charge.

8. Installation de vérification de pression de freinage (12) selon l'une des revendications 4 à 7, **caractérisée en ce que** l'installation de vérification de pression de freinage (12) est en liaison avec un régulateur de rampe (38) raccordé à un véhicule ferroviaire (13) pour réduire la résistance de ligne lors de la mesure d'un convoi.

9. Procédé pour la vérification des systèmes de freinage à air comprimé (41) de véhicules ferroviaires (13) avec une installation de vérification de pression de freinage (12) selon l'une des revendications 4 à 8, **caractérisé en ce que** le procédé comprend les étapes suivantes :
a. le raccordement du dispositif de mesure de pression d'air (1) à la conduite d'air comprimé (2) du système de freinage à air comprimé (41) à mesurer des véhicules ferroviaires (13) ;
b. la transmission sans fil d'un paquet de données de commande (22) par l'installation de vérification de pression de freinage (12) au dispositif de mesure de pression d'air (1) ;
c. la mesure d'un temps de réponse de freinage (23) ou d'un temps de desserrage de frein (27) par le dispositif de mesure de pression d'air (1) ;
d. la transmission sans fil d'un paquet de données de mesure (26) par le dispositif de mesure de pression d'air (1) à l'installation de vérification de pression de freinage (12).

10. Procédé selon la revendication 9, **caractérisé en ce que** l'étape c) comprend le déclenchement de la fonction de freinage au niveau de la conduite d'air principale et la détection du temps de réponse de freinage (23) entre le moment de l'augmentation de pression (28) et le moment de l'état rempli (29) par l'unité de détection de temps (8) du dispositif de mesure de pression d'air (1).

11. Procédé selon la revendication 9, **caractérisé en ce que** l'étape c) comprend l'arrêt de la fonction de freinage au niveau de la conduite d'air principale et la détection du temps de desserrage de frein (27) entre le moment de la chute de pression (24) et le moment de l'état sans pression (25) par l'unité de détection de temps (8) du dispositif de mesure de pression d'air (1).

12. Procédé selon l'une des revendications 9 à 11, **caractérisé en ce que** l'on prévoit plusieurs dispositifs de mesure de pression d'air (1) et **en ce que** les paquets de données de mesure (26) sont transmis séquentiellement depuis un dispositif de mesure de pression d'air (1) jusqu'au dispositif de mesure de pression d'air (1) suivant jusqu'à ce que le dernier dispositif de mesure de pression d'air (1) transmet les paquets de données de mesure (26) collectés à l'installation de vérification de pression de freinage (12).

13. Procédé selon l'une des revendications 9 à 12, **caractérisé en ce que** l'on prévoit plusieurs dispositifs de mesure de pression d'air (1) et **en ce que** les paquets de données de commande (22) sont tout d'abord transmis par l'installation de vérification de pression de freinage (12) à un premier dispositif de mesure de pression d'air (1), et ensuite séquentiellement par un dispositif de mesure de pression d'air (1) au dispositif de mesure de pression d'air (1) suivant jusqu'au dernier dispositif de mesure de pression d'air (1).

14. Procédé selon l'une des revendications 9 à 13, **caractérisé en ce que** le paquet de données de mesure (26) comprend au moins une identification univoque du dispositif de mesure de pression d'air (1) et l'intervalle de temps mesuré sous la forme du temps de réponse de freinage (23) ou du temps de desserrage de frein (27).

15. Procédé selon la revendication 14, **caractérisé en ce que** le paquet de données de mesure (26) comprend en outre la valeur de pression mesurée, un facteur de correction ainsi que l'état de l'interface utilisateur (6).

16. Procédé selon l'une des revendications 9 à 15, **caractérisé en ce que** le paquet de données de commande (22) comprend au moins une identification univoque du dispositif de mesure de pression d'air (1) ainsi qu'au moins une identification univoque spécifiant si l'on mesure une chute de pression ou une augmentation de pression.

17. Procédé selon la revendication 16, **caractérisé en ce que** le paquet de données de commande (22) comprend en outre la valeur de démarrage de pression (30) et/ou la valeur d'arrêt de pression (31).

18. Procédé selon l'une des revendications 9 à 17, **caractérisé en ce que** l'installation de vérification de pression de freinage (12) émet, en cas d'un flanc descendant de conduite d'air principale, une instruction à l'attention d'un régulateur de rampe (38) pour la ventilation de la conduite d'air principale.
